# EUROPEAN PATENT APPLICATION

(11) **EP 3 915 695 A1**
(43) Date of publication of application: **01.12.2021**
(21) Application number: 20177118.5
(22) Date of filing: 28.05.2020
(51) Int. Cl.: B21J 5/08, B21K 1/46, B21K 1/56, B21J 1/02

(54) **METHOD FOR MANUFACTURING A PROFILED ROD**

(71) Applicant: Hilti Aktiengesellschaft, 9494 Schaan (LI)
(72) Inventor: Gebauer, Christian, 9450 Altstätten (CH); Zielbauer, Florian, 9464 Rüthi (CH); Domani, Guenter, 88138 Weissensberg (DE)
(74) Representative: Hilti Aktiengesellschaft Corporate Intellectual Property

(57) **Abstract**

Method for manufacturing a profiled rod from a rod-shaped metal blank comprising:
- a first deformation step, in which the blank is embedded in a first die arrangement, and subsequently, the blank is axially compressed so as to radially displace blank material within the first die arrangement to form a first surface protrusion structure on the blank, and
- following the first deformation step, a second deformation step, in which the blank is embedded in a second die arrangement, and subsequently, the blank is axially compressed so as to radially displace blank material within the second die arrangement to form a second surface protrusion structure on the blank, wherein at least a section of the second surface protrusion structure is closer to the first end than the first surface protrusion structure is.

## Description

The invention relates to a method for manufacturing a profiled rod.

US 2581774 A discloses a method for producing valve stems, in which a threaded section is formed by axially compressing a rod-shaped blank.

US9266165 B2 describes a method for providing a rebar with a thread by axially compressing the rebar.

DE102010011711A1 discloses methods for forming threaded fasteners which include advancing a punch into one end face of a rod-shaped blank.

US9475109 B2 discloses a method for manufacturing a hollow anchor with a radial, helical contour on its outer surface, from a hollow blank. According to US9475109 B2, a mandrel is guided through the internal opening of the hollow blank, and the passage of the mandrel through the blank causes the material of the blank to be extruded outwardly into a die, in order to form the contour.

EP2156909 B1 discloses a method for manufacturing a screw fastener with a radial outer contour, in which a blank is inserted into a multi-part split mould, whose die stocks have an inner profiling forming the outer contour, wherein the die stocks are closed by means of radially directed forces in order to form the outer contour.

Dörr, Florian "Beitrag zum Umformfügeprozess einer Welle-Nabe-Verbindung durch Quer-Fließpressen", 2016, Stuttgart: Institut für Umformtechnik, ISBN: 978-3-946818-02-1, describes different methods for creating shaft-hub-connections by axially compressing blanks so as to radially displace material (lateral impact extrusion).

US4274276 A describes a "floating" die arrangement for lateral impact extrusion, in which the die is arranged in a floating manner, between upper springs and lower springs, such that both a punch and a counterpunch can advance into the die when the arrangement is placed in a press.

It is an object of the invention to provide a method for manufacturing a profiled rod that provides particularly high versatility regarding the possible rod profiles, especially at particularly low cost, low effort and/or good quality.

This object is achieved by a method according to claim 1. Dependent claims refer to preferred embodiments of the invention.

The invention provides a method for manufacturing a profiled rod from a rod-shaped metal blank having a first end and a second end, located opposite the first end, and a longitudinal axis, which extends through the first end and through the second end, comprising:
- a first deformation step, in which the blank is embedded in a first die arrangement, and subsequently, the blank is axially compressed so as to radially displace blank material within the first die arrangement to form a first surface protrusion structure on the blank, and
- following the first deformation step, a second deformation step, in which the blank is embedded in a second die arrangement, and subsequently, the blank is axially compressed so as to radially displace blank material within the second die arrangement to form a second surface protrusion structure on the blank, wherein at least a section of the second surface protrusion structure is closer to the first end of the blank than the first surface protrusion structure is.

Accordingly, a lateral extrusion process is provided. In a process of this type, an elongate blank arranged in a die is axially compressed, in particular between a punch and a counterpunch, so as to radially displace blank material in order to form a lateral surface structure on the blank. According to the invention, the process is multi-stage and provides at least two successive deformation steps, namely a first deformation step, in which a first surface protrusion structure is formed, and a subsequent second deformation step, in which a second surface protrusion structure, which is, at least partly, axially offset with respect to the first surface protrusion structure, is formed.

This multi-step deformation strategy is based on the finding that, in a lateral extrusion process, radial material flow is often non-homogenous along the length of the blank. For example, due to the buckling characteristics of a generally cylindrical blank, radial material flow might preferentially occur close to the ends of the blank, whereas radial material flow in the middle of the blank might be delayed. As a consequence, surface protrusion structures located close to the ends of the blank tend to form earlier during the process than surface protrusion structures located in the middle of the blank. Therefore, in order to fully form the surface protrusion structures located in the middle of the blank, it is necessary to feed material past the surface protrusion structures located close to the ends, which are already developed at this that time. This, in term, can cause significant shearing at the surface protrusion structures located close to the ends, which might be undesired in view of manufacturing quality and/or material properties.

In view of this, a multi-step deformation strategy is proposed, in which the longitudinal extent of the surface structure is developed in subsequent steps. Since a relatively short section is formed in each deformation step, a particularly homogenous material flow can be provided in a particularly efficient manner, and therefore, axial material feed along already-existent surface structures can be efficiently avoided. This in term can reduce shearing during manufacture and thus lead to particularly good manufacturing quality and/or material properties.

Throughout this document - wherever the terms "axially", "radially" and "circumferentially" are used, they should, in particular, refer to the longitudinal axis of the blank.

The lateral extrusion process used provides particularly high versatility, since, in contrast to a rolling process, the obtainable surface profiles are not limited to developable surfaces.

In particular, the profiled rod can be an anchor rod, such as a threaded rod or an anchor rod intended to be chemically anchored. The blank can preferably be generally cylindrical, in particular cylindrical with a circular base. The first surface protrusion structure and/or the second surface protrusion structure are formed on the lateral surface of the blank. The first surface protrusion structure is preferably a single, contiguous protrusion, but could also comprise several non-contiguous sections. The second surface protrusion structure can be a single, contiguous protrusion, but can preferably comprise several non-contiguous sections. Auxiliary protrusions might also be formed in the first deformation step and/or the second deformation step, such as cutting edges.

It is possible to further deform the first surface protrusion structure in the second deformation step. In this case, the second die arrangement can have a supporting cavity for receiving the first surface protrusion structure which, on purpose, does not fully correspond to the contour of the first surface protrusion structure. Alternatively, the first surface protrusion structure can remain generally unaltered in the second deformation step, in particular by providing a closely fitting supporting cavity.

At least a section of the second surface protrusion structure is located closer to the first end of the blank than the first surface protrusion structure is, i.e. the second surface protrusion structure is at least partly axially offset with respect to the first surface protrusion structure, namely towards the first end.

It is particularly preferred that at least parts of the second surface protrusion structure are contiguous with at least parts of the first surface protrusion structure. Preferably, the second surface protrusion structure is contiguous with the the first surface protrusion structure. Accordingly, the respective surface protrusion structures touch or merge throughout in an unbroken sequence. This can provide a particularly high diversity of shapes. For example, a contiguous screw thread structure can be provided by the first surface protrusion structure and the second surface protrusion structure, considered together.

According to another preferred embodiment of the invention, a first section of the second surface protrusion structure is closer to the first end than the first surface protrusion structure is, and a second section of the second surface protrusion structure is closer to the second end than the first surface protrusion structure is. Accordingly, the second surface protrusion structure extends, axially, on both sides of the first surface protrusion structure. This can allow particularly efficient manufacture of extended structures.

Preferentially, in the first deformation step, the blank is axially compressed by simultaneously advancing both the first end and the second end with respect to the first die arrangement, and/or in the second deformation step, the blank is axially compressed by simultaneously advancing both the first end and the second end with respect to the second die arrangement. Accordingly, both ends of the blank are simultaneously moved with respect to the respective die arrangement, which can further improve homogeneity and decrease shear. Moving both ends of the blank with respect to the respective die arrangement can be achieved by providing a punch, acting on the first end, and a counterpunch, acting on the second end, wherein both the punch and the counterpunch are displaced with respect to the respective die arrangement. In particular, a floating die system can be employed, which allows simultaneous advancement in a press arrangement. The first end and the second end of the blank are advanced towards one another in the respective deformation steps.

As already hinted at above, the first surface protrusion structure and the second surface protrusion structure can constitute at least one helical screw thread structure. Accordingly, a threaded rod can be manufactured in a particularly versatile manner. Additional functional elements, such as cutting elements, can be formed in the first deformation step and/or in the second deformation step.

It is particularly preferred that the material flow is, at least partly, directed radially outwardly in the respective deformation step. Accordingly, it is particularly preferred that, in the first deformation step, the blank is axially compressed so as to radially outwardly displace blank material within the first die arrangement, and/or in the second deformation step, the blank is axially compressed so as to radially outwardly displace blank material within the second die arrangement. This allows e.g. manufacture of externally threaded rods or of externally structured anchor rods. In particular, the blank can be solid.

However, it is also possible that the blank is hollow. If a hallow blank is used, the material flow can also be, at least partly, directed radially inwardly in the respective deformation step. Thus, it can be provided that in the first deformation step, the blank is axially compressed so as to radially inwardly displace blank material within the first die arrangement, and/or in the second deformation step, the blank is axially compressed so as to radially inwardly displace blank material within the second die arrangement.

In particular, the blank can consist of steel. This material can be particularly suitable for anchoring purposes and/or particularly suitable for the lateral extrusion process.

It is preferred that the method comprises a screw head formation step, which follows the first deformation step and the second deformation step, and in which a screw head is formed on the blank. Accordingly, a screw head is formed on the blank, but only after the first deformation step and the second deformation step are completed. This sequence considers that the presence of a screw head might hinder the axial compression in the deformation steps, and therefore, the screw head formation step follows these steps. This can further reduce manufacturing effort and/or allow a particularly easy die design. The screw head could for example be a hex head. However, the invention could also be used for manufacturing headless screws, having for example a socket drive.

When a screw thread is formed by lateral impact extrusion, in particular employing the described sequence, this will become manifest in the flow lines. The invention thus also relates to a screw, preferably manufactured according to the described method, having at least one screw thread, wherein in at least one sectional plane of the screw thread that includes the longitudinal axis of the screw, all of the flow lines of the screw thread are strictly convex with respect to the longitudinal axis of the screw. Strictly convex is, in particular, to imply that they do not include concavity.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figures 1 to 11 illustrate consecutive steps of a manufacturing method.
Figure 12 illustrates a floating die system that can be used in one or more of the deformation steps of the method of figures 1 to 11.
Figures 13 and 14 illustrate alternative deformation steps applied to a hollow rod-shaped blank 5.
Figures 15 to 18 show sectional views through differently-manufactured screws having a screw thread each, in each case in a sectional plane that includes the longitudinal axis of the screw.

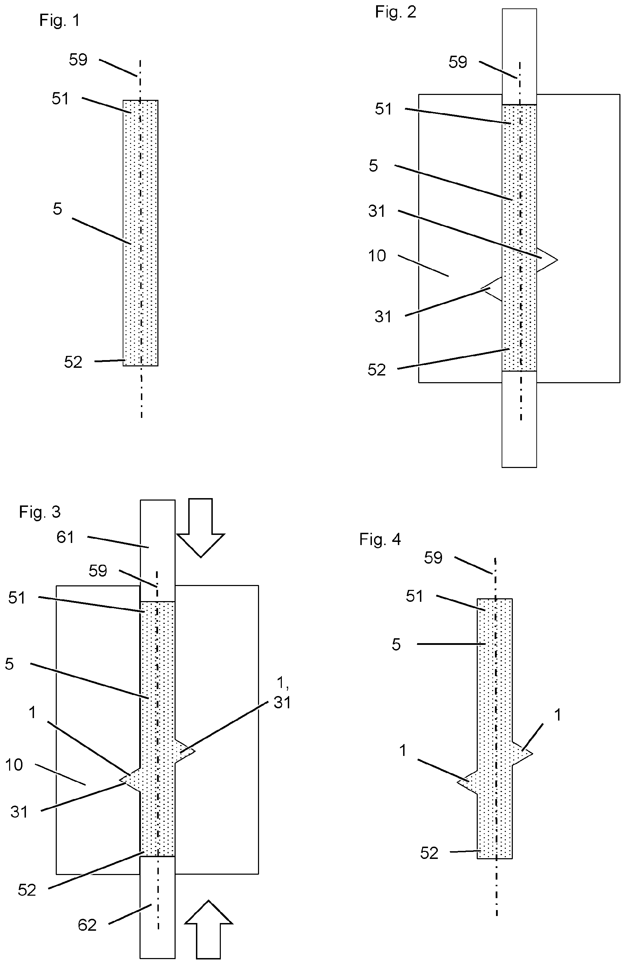

Figures 1 to 11 illustrate consecutive steps of an exemplary manufacturing method. In a first step, illustrated in Figure 1, an elongate, rod-shaped blank 5 is provided. In particular, the blank 5 is generally circular cylindrical and can be a piece of wire. The blank 5 consists of metal, in particular of steel.

The blank 5 comprises a first end 51 and a second end 52, wherein the first end 51 is located opposite the second end 52 on the blank 5. The blank 5 furthermore comprises a longitudinal axis 59, which passes through both the first end 51 and the second end 52. In the present embodiment, the blank 5 is solid, i.e. without an internal cavity.

In a first deformation step, which is illustrated in figure 2 and 3, the blank 5 is arranged in a first die arrangement 10, so that the first die arrangement 10 surrounds the lateral surface of the blank 5 in an annular manner, as shown in figure 2. The first die arrangement 10 is provided with a first cavity 31 intended to receive blank material when the blank 5 is axially (with respect to its longitudinal axis 59) compressed. When the blank 5 is embedded in the first die arrangement 10 as intended (i.e. when the first die arrangement 10 surrounds the blank 5 in an annular manner), the first cavity 31 projects radially outwardly (with respect to the longitudinal axis 59) from the blank 5. In the present embodiment, the first cavity 31 is helical and has the form of an internal thread.

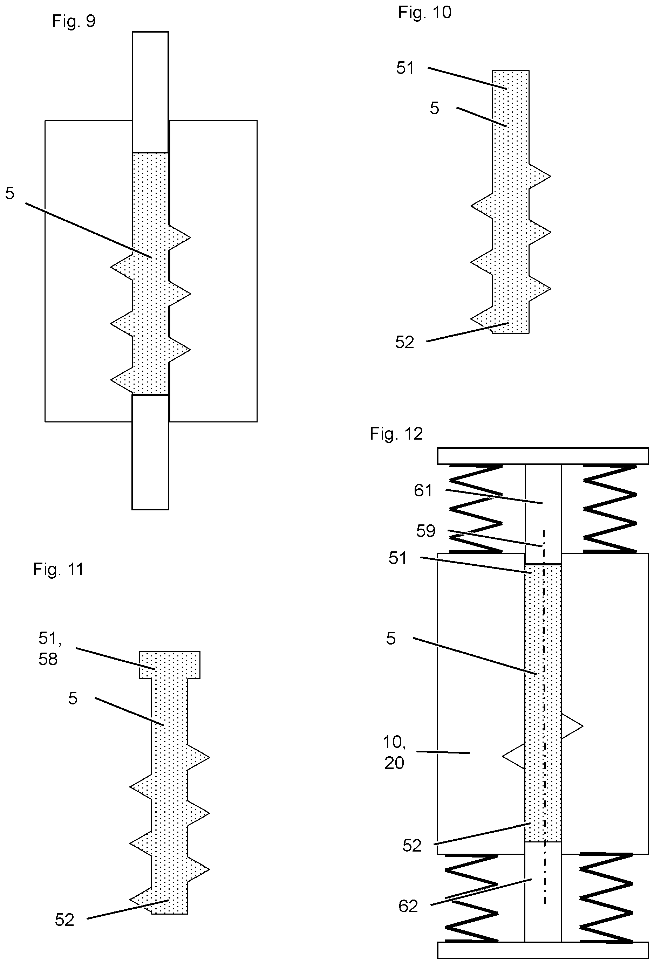

As shown in figure 3, the blank 5 is then axially (with respect to the longitudinal axis 59) compressed. In particular, the blank 5 is axially compressed by displacing both the first end 51 and the second end 52 relative to the first die arrangement 10 into the first die arrangement 10. This is achieved by means of a punch 61 that acts upon the first end 51 and a counterpunch 62 that acts upon the second end 52, wherein both the punch 61 and the counterpunch 62 are displaced relative to the first die arrangement 10. Simultaneous advancement of both the punch 61 and the counterpunch 62 into the first die arrangement 10 can be achieved using a floating die system like that shown in figure 12, and described in more detail below.

The mentioned axial compression of the blank 5 causes blank material to be displaced and to flow radially outwardly, away from the longitudinal axis 59, into the first cavity 31. In this way, a first surface protrusion structure 1 is formed on the lateral surface of the blank 5. The first surface protrusion structure 1 geometrically corresponds to the first cavity 31 and therefore, the first surface protrusion structure 1 is a helical external thread section in the present embodiment. The resulting blank 5 is illustrated in figure 4.

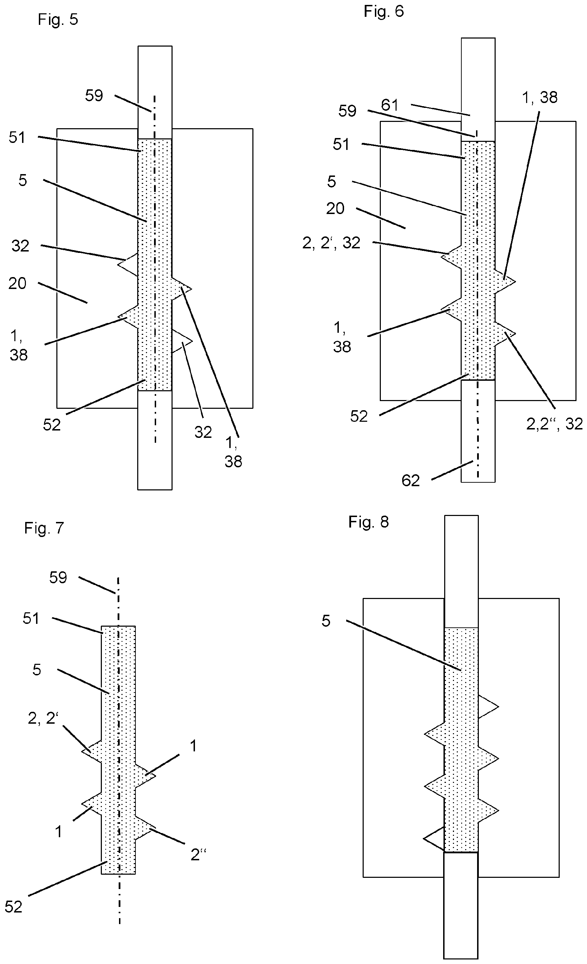

In a second deformation step, which follows the first deformation step, and which is illustrated in figures 5 and 6, the blank 5 is arranged in a second die arrangement 20, so that the second die arrangement 20 surrounds the lateral surface of the blank 5 in an annular manner, as shown in figure 5. The second die arrangement 20 is provided with a supporting cavity 38 for receiving the first surface protrusion structure 1. The second die arrangement 20 is furthermore provided with a second cavity 32 intended to receive blank material when the blank 5 is axially (with respect to its longitudinal axis 59) compressed. When the blank 5 is embedded in the second die arrangement 20 as intended (i.e. when the second die arrangement 20 surrounds the blank 5 in annular manner), the supporting cavity 38 and the second cavity 32 project radially outwardly (with respect to its longitudinal axis 59) from the blank 5.

As shown in figure 6, the blank 5 is then axially (with respect to the longitudinal axis 59) compressed. In particular, the blank 5 is axially compressed by displacing both the first end 51 and the second end 52 relative to the second die arrangement 20 into the second die arrangement 20. This is achieved by means of a punch 61 that acts upon the first end 51 and a counterpunch 62 that acts upon the second end 52, wherein both the punch 61 and the counterpunch 62 are displaced relative to the second die arrangement 20. Simultaneous advancement of both the punch 61 and the counterpunch 62 into the second die arrangement 20 can again be achieved using a floating die system like that shown in figure 12, and described in more detail below.

The mentioned axial compression of the blank 5 causes blank material to be displaced and to flow radially outwardly, away from the longitudinal axis 59, into the second cavity 32. In this way, a second surface protrusion structure 2 is formed on the lateral surface of the blank 5. The second surface protrusion structure 2 geometrically corresponds to the second cavity 32.

The second cavity 32 comprises two helical sections and extends on both sides of the first cavity 31, i.e. the supporting cavity 38 is axially embedded in the first cavity 31. As a consequence, the second surface protrusion structure 2 has a helical first section 2', which is located closer to the first end 51 of the blank 5 than the first surface protrusion structure 1 is, as well as a helical second section 2", which is located closer to the second end 52 of the blank 5 than the first surface protrusion structure 1 is. In other words, the second surface protrusion structure 2 extends, axially, on both sides of the first surface protrusion structure 1. In the present embodiment, both sections of the second cavity 32 are helical and have the form of an internal thread. The first cavity 31 and the second cavity 32 are so dimensioned that the first surface protrusion structure 1 and the second surface protrusion structure 2 form a contiguous helical thread structure.

The supporting cavity 38 can be so dimensioned that it rests snugly against the first surface protrusion structure 1 when the blank 5 is inserted into the first die arrangement 10. Alternatively, the supporting cavity 38 can be, at least regionally, larger than the first surface protrusion structure 1, so that the first surface protrusion structure 1 is further deformed in the second deformation step.

The blank 5 resulting from the second deformation step is illustrated in figure 7.

The present embodiment includes a third deformation step, illustrated in figures 8 and 9. The third deformation step is analogous to the second deformation step, wherein in the third deformation step, the contiguous helical thread structure is further extended towards the first end 51 and towards the second end 52 of the blank. The blank 5 resulting from the third deformation step is shown in figure 10.

Finally, in an screw head formation step, a screw head 58 is formed on the first end 51 of the blank 5, as shown in figure 11, for example by upsetting the blank 5.

Figure 12 shows a floating die system, which can be used for the method illustrated in figures 1 to 11. In such a floating die system, the respective die arrangement (for example the first die arrangement 10 or the second die arrangement 20) is spring-suspended both with respect to the punch 61 intended for acting against the first end 51 of the blank 5, and with respect to the counterpunch 62 intended for acting against the second end 52 of the blank 5. If the punch 61 is advanced towards the counterpunch 62, the spring-suspension will transform this movement into simultaneous movement of both the punch 61 and the counterpunch 62 into the respective die arrangement 10 or 20 (as also described in US4274276).

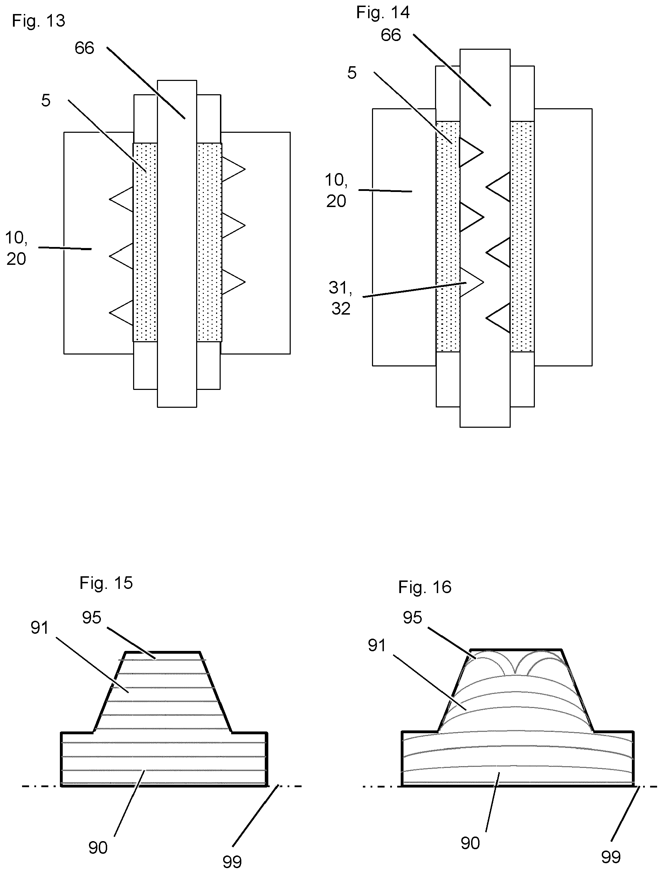

In the previous embodiments, the blank 5 was solid, i.e. without an internal cavity. It is, however, also possible to use a hollow blank 5. In this case, the respective die arrangement 10 or 20 could include a support mandrel 66, which is inserted into the hallow blank 5 during the first and/or second deformation step. The support mandrel 66 can be generally cylindrical, as shown in figure 13, or it could comprise at least sections of the first cavity 31 or second cavity 32, respectively, for forming internal first surface protrusion structures 1 or internal second surface protrusion structures 2, respectively, as shown in figure 14. Thus , internal thread structure could also be manufactured by means of the described method.

The method by which a screw thread is manufactured can be determined from the flow lines of the metal material. Figures 15 to 18 show, schematically, cross sections of screws 90 each having a screw thread 91 that has been manufactured by different methods, respectively, in each case in an exemplary sectional plane of the screw thread 91 that includes the longitudinal axis 99 of the screw 90.

In case of figure 15, the screw thread 91 has been manufactured by cutting, and all of the flow lines 95 of the screw thread 91 in the sectional plane are generally parallel, in particular to the longitudinal axis 99 of the screw 90.

In case of figure 16, the screw thread 91 has been manufactured by rolling. In this case, some of the flow lines 95 of the screw thread 91 in the sectional plane are generally convex with respect to the longitudinal axis 99 of the screw 90. However, some flow lines 95 close to the crest of the screw thread 91 have some concavity and are therefore not strictly convex with respect to the longitudinal axis 99 of the screw 90.

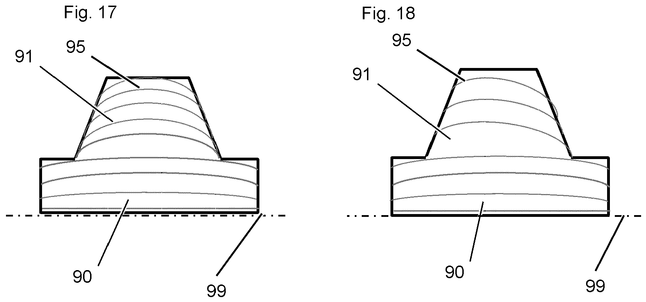

In case of figures 17 and 18, the screw thread 91 has been manufactured by lateral impact extrusion, i.e. by axially compressing a blank so as to radially displace blank material to give the screw thread 91. In this case, all of the flow lines of the screw thread 91 in the sectional plane are strictly convex with respect to the longitudinal axis 99 of the screw 90, wherein the flow lines could be either symmetric (see figure 17) or also tilted (see figure 18), depending on process details such as friction, thread pitch, geometry and/or others.

## Claims

1. Method for manufacturing a profiled rod from a rod-shaped metal blank (5) having a first end (51) and a second end (52), located opposite the first end, and a longitudinal axis (59), which extends through the first end (51) and trough the second end (52), comprising:
- a first deformation step, in which the blank (5) is embedded in a first die arrangement (10), and subsequently, the blank (5) is axially compressed so as to radially displace blank material within the first die arrangement (10) to form a first surface protrusion structure (1) on the blank (5), and
- following the first deformation step, a second deformation step, in which the blank (5) is embedded in a second die arrangement (20), and subsequently, the blank (5) is axially compressed so as to radially displace blank material within the second die arrangement (20) to form a second surface protrusion structure (2) on the blank (5), wherein at least a section (2') of the second surface protrusion structure (2) is closer to the first end (51) of the blank (5) than the first surface protrusion structure (1) is.

2. Method according to claim 1,
**characterized in that**
at least parts of the second surface protrusion structure (2) are contiguous with at least parts of the first surface protrusion structure (1).

3. Method according to any of the proceeding claims,
**characterized in that**
a first section (2') of the second surface protrusion structure (2) is closer to the first end (51) than the first surface protrusion structure (1) is, and a second section (2") of the second surface protrusion structure (2) is closer to the second end (52) than the first surface protrusion structure (1) is.

4. Method according to any of the proceeding claims,
**characterized in that**
- in the first deformation step, the blank (5) is axially compressed by simultaneously advancing both the first end (51) and the second end (52) with respect to the first die arrangement (10), and
- in the second deformation step, the blank (5) is axially compressed by simultaneously advancing both the first end (51) and the second end (52) with respect to the second die arrangement (20).

5. Method according to any of the proceeding claims,
**characterized in that**
- the first surface protrusion structure (1) and the second surface protrusion structure (2) constitute at least one helical screw thread structure.

6. Method according to any of the proceeding claims,
**characterized in that**
- in the first deformation step, the blank (5) is axially compressed so as to radially outwardly displace blank material within the first die arrangement (10), and
- in the second deformation step, the blank (5) is axially compressed so as to radially outwardly displace blank material within the second die arrangement (20).

7. Method according to any of the proceeding claims,
**characterized in that**
the blank (5) consists of steel.

8. Method according to any of the proceeding claims,
**characterized in that**
the method comprises a screw head formation step, which follows the first deformation step and the second deformation step, and in which a screw head (58) is formed on the blank (5).

9. Screw (90), preferably manufactured according to a method of any of the proceeding claims, having at least one screw thread (91),
**characterized in that**
in at least one sectional plane of the screw thread (91) that includes the longitudinal axis (99) of the screw (90), all of the flow lines of the screw thread (91) are strictly convex with respect to the longitudinal axis (99) of the screw.
